# FASCICULE DE BREVET EUROPEEN

(11) **EP 3 333 050 B1**
(45) Date de publication et mention de la délivrance du brevet: **11.09.2019**
(21) Numéro de dépôt: 17202521.5
(22) Date de dépôt: 20.11.2017
(51) Int. Cl.: B62D 25/14

(54) **FIXATION PAR DEMI-COQUES D'UN JAMBAGE DE TRAVERSE DE POSTE DE CONDUITE DE VÉHICULE**
BEFESTIGUNG MIT HALBSCHALEN EINES QUERTRÄGERS EINER FAHRERKABINE EINES KRAFTFAHRZEUGS
ATTACHMENT BY HALF-SHELLS OF A CROSS-MEMBER OF A DRIVER'S COMPARTMENT OF A VEHICLE

(30) Priorité: 09.12.2016 FR 1662194
(43) Date de publication de la demande: 13.06.2018
(73) Titulaire: RENAULT s.a.s., 92100 Boulogne-Billancourt (FR)
(72) Inventeur: FLANDIN, MICHAEL, 28410 BROUE (FR); DEMEULES, REMI, 78200 MANTES LA JOLIE (FR)

(56) Documents cités:
- FR-A1- 2 722 750
- FR-A1- 2 919 261
- FR-A3- 3 000 007
- JP-A- H04 252 779

## Description

La présente invention concerne une traverse de poste de conduite d'un véhicule, dite aussi traverse de planche de bord, et comportant un élément métallique principal transversal, ou barre horizontale, et un jambage central destiné à se fixer sur le tunnel central du plancher du véhicule. Notamment, l'invention se rapporte à une fixation simplifiée d'un tel jambage, utilisant des demi-coques.

Il y a de très nombreuses formes connues de traverses de poste de conduite. Le document FR 2 891 799 montre une telle traverse dans laquelle la barre horizontale est formée de deux tronçons de tubes métalliques de diamètre différent et la jambe de maintien est un profilé métallique.

Selon le document US 6 523 878, le jambage central est réalisé sous forme de deux jambes venant se fixer de part et d'autre du tunnel central, reliées par une barre horizontale, destinée à supporter les équipements de climatisation. Les éléments constituant le jambage central sont des profilés métalliques fixés, par exemple par soudage, à la barre horizontale transversale.

L'ensemble de la traverse avec ses deux éléments métalliques est relativement lourd et dans le cadre de l'allégement souhaité des véhicules, il serait souhaitable de trouver un moyen de rendre la traverse de poste de conduite plus légère sans diminuer sa résistance ni compliquer son implantation dans le véhicule.

Le document EP 2 233 385 A1 décrit ainsi une traverse hybride comportant une barre horizontale métallique sur laquelle les éléments constituants le jambage et d'autres éléments sont en matériau polymère surmoulé.

Le document FR 3 000 007 A1 décrit une traverse comportant une barre horizontale métallique à laquelle sont fixés les éléments constituants le jambage, ces derniers étant réalisés d'une pièce en matériau polymère moulé.

Il existe néanmoins toujours un besoin pour alléger la traverse et améliorer et simplifier la liaison entre le jambage et la barre horizontale métallique.

L'invention atteint cet objectif en proposant une traverse de poste de conduite d'un véhicule, comportant un élément métallique principal transversal et un jambage central destiné à être fixé au plancher du véhicule, le jambage étant une pièce unitaire comprenant deux jambes sensiblement perpendiculaires à une direction longitudinale de l'élément métallique principal transversal et au moins une barre de liaison entre les deux jambes, des moyens de fixation supérieurs et inférieurs étant prévus en haut et en bas du jambage pour le fixer respectivement à l'élément métallique principal et au plancher, caractérisée en ce que :
- les moyens de fixation supérieurs comprennent une paire de demi-coques associée à chaque jambe, au moins une demi-coque de chaque paire faisant partie de la jambe, les demi-coques de chaque paire étant solidarisées l'une à l'autre en emprisonnant entièrement l'élément métallique principal transversal, dans un plan perpendiculaire à sa direction longitudinale, et en épousant le contour de l'élément métallique principal transversal.

Un tel agencement permet de réaliser une liaison simple et néanmoins robuste entre l'élément métallique principal transversal et le jambage, avec un nombre limité de pièces.

Avantageusement, les demi-coques et l'élément métallique principal transversal peuvent être conformés pour bloquer tout mouvement de l'un par rapport à l'autre. Ceci peut être obtenu par une forme particulière de ces éléments et/ou par des éléments de blocage.

Avantageusement, l'élément métallique principal transversal peut présenter une section transversale (dans un plan perpendiculaire à sa direction longitudinale) non circulaire, par exemple ovale ou de préférence polygonale. Une section polygonale, notamment hexagonale, permet en outre de limiter les jeux d'assemblage.

Avantageusement, afin de faciliter le montage du jambage sur l'élément métallique principal transversal, au moins une demi-coque de chaque paire peut comprendre au moins un élément d'indexation mâle/femelle coopérant avec un élément d'indexation correspondant solidaire de l'élément métallique principal transversal. Ceci permet un bon positionnement d'une demi-coque par rapport à l'élément métallique principal transversal, qui peut servir de prémaintien du jambage lors de son montage. Cet agencement participe également au blocage d'éventuels mouvements relatifs entre les demi-coques et l'élément métallique principal transversal.

De préférence, le ou les éléments d'indexation d'une demi-coque par rapport à l'élément métallique principal transversal peuvent être ménagés sur la demi-coque faisant partie de la jambe, ce qui peut faciliter un prémaintien de la jambe avant la fixation des demi-coques entre elles.

Avantageusement, les demi-coques de chaque paire peuvent comprendre des éléments d'indexation mâle/femelle complémentaires pour un bon positionnement des demi-coques l'une par rapport à l'autre.

Avantageusement, les demi-coques de chaque paire peuvent être solidarisées suivant un unique plan, ce qui peut faciliter l'assemblage de chaque paire.

Ce plan peut être un plan sensiblement horizontal dans une position d'utilisation de la traverse dans laquelle l'élément métallique principal transversal s'étend sensiblement horizontalement, pour une position ergonomique améliorée au montage. En variante ou en combinaison, il peut s'agir d'un plan contenant un axe de symétrie longitudinal de l'élément métallique principal transversal, pour une meilleure répartition des contraintes exercées sur chaque demi-coque.

Avantageusement, le jambage peut comprendre des zones de fixation destinées à recevoir en fixation au moins un élément fonctionnel, tel qu'un groupe de gestion de la température de l'habitacle. Ces zones de fixation peuvent notamment être agencées pour permettre une fixation suivant une direction sensiblement horizontale dans la position d'utilisation de la traverse. De telles zones de fixation peuvent comprendre des surfaces planes percées pour la réception de vis ou rivets.

Le jambage est réalisé d'une pièce, de préférence en matériau moulé. Ce matériau peut être choisi parmi un polymère et du magnésium et tout autre alliage métallique léger présentant une résistance suffisante. Le jambage peut également être fait de ces deux matériaux (conception hybride), le matériau polymère pouvant par exemple être surmoulé sur le magnésium ou un alliage métallique léger.

Avantageusement, les demi-coques de chaque paire peuvent être en matériau polymère, notamment au moins en partie, et être reliées par un film charnière en matériau polymère. Ceci peut faciliter leur mise en place au montage.

D'autres caractéristiques et avantages de l'invention ressortiront de la description suivante d'un exemple de réalisation. Il sera fait référence aux dessins annexés, non limitatifs, sur lesquels :
- la figure 1 est une vue en perspective d'une traverse de planche de bord selon l'invention, avec son jambage central ;
- la figure 2 est une vue en perspective d'une fixation supérieure du jambage central de la figure 1 ;
- la figure 3 est une vue en coupe latérale de la traverse de la figure 1 (suivant l'axe Y) ;
- la figure 4 est une vue en perspective avant d'une partie d'une fixation supérieure du jambage central de la figure 1 ;
- la figure 5 est une vue en perspective de la traverse de la figure 1 sur laquelle est monté un groupe de gestion de la climatisation, avec deux vues de détail des fixations du jambage central au groupe de gestion.

Dans la présente description, les termes avant, arrière, supérieur, inférieur, font référence aux directions avant et arrière du véhicule, lorsque la traverse est montée sur le véhicule. Les axes X, Y, Z, correspondent respectivement à l'axe longitudinal (d'avant en arrière), transversal et vertical du véhicule.

Par sensiblement horizontal, longitudinal ou vertical, on entend une direction formant un angle d'au plus ±20°, voire d'au plus 10° ou d'au plus 5° avec une direction horizontale, longitudinale ou verticale.

Par sensiblement parallèle, perpendiculaire, on entend une direction/un angle s'écartant d'au plus ±20°, voire d'au plus 10° ou d'au plus 5° d'une direction parallèle, perpendiculaire.

La traverse 1 représentée comprend un élément métallique tubulaire transversal 2 (ou barre transversale) et un jambage central 3 constitué d'une pièce unitaire (réalisée d'une pièce), par exemple en plastique moulé. La pièce peut notamment être réalisée en résine mêlée de charges, par exemple sous forme particulaire ou de préférence sous forme de fibres. Elle peut également être en magnésium ou en plastique et magnésium ou alliage léger.

De manière connue en soi, l'élément métallique tubulaire transversal 2 est destiné à supporter divers accessoires, tel que par exemple un support de la colonne de direction. Il est constitué ici de deux tronçons tubulaires 2a, 2b de section différente. L'invention n'est toutefois pas limitée à ce mode de réalisation, un unique tronçon pourrait être prévu.

L'élément métallique tubulaire transversal 2 présente une direction longitudinale 4, laquelle s'étend sensiblement horizontalement dans la position de montage (d'utilisation) de la traverse 1.

Le jambage 3 comporte des jambes 5 sensiblement perpendiculaires à la direction longitudinale 4, ici sensiblement verticales et symétriques, et deux barres de liaison respectivement à mi-hauteur 6 et en position haute 7. La section basse des jambes 5 est ici sensiblement verticale, tandis que sa section supérieure s'évase un peu vers l'extérieur (direction Y et direction opposée à Y) et vers l'avant du véhicule (direction opposée à X).

La structure des jambes 5 et des barres de liaison 6, 7 du jambage 3 peut être tel que décrit dans le document FR 3 000 007 A1. Les jambes 5 peuvent ainsi être formées de plusieurs sections de profilés nervurés, formant un canal ouvert vers l'extérieur et défini par un fond 5a et des ailes 5b (ou nervures). Les barres de liaison 6, 7 peuvent également être en forme de canal à fond et ailes, ouvert vers l'avant du véhicule, et renforcé éventuellement par des voiles obliques s'étendant d'une aile à l'autre perpendiculairement au fond à l'intérieur du canal. La forme exacte de ces barres peut toutefois être déterminée par les éléments qui doivent être portés par ces barres, comme par exemple une commande de boîte de vitesse. Des vis peuvent être prévues à l'arrière du jambage pour permettre la fixation de ces divers éléments ou accessoires.

Des moyens de fixation supérieurs et inférieurs sont également prévus en haut et en bas du jambage 3 pour le fixer respectivement à l'élément métallique principal 2 et au plancher du véhicule (non représenté). Le haut des sections hautes des jambes 5 est ainsi pourvu de moyens de fixation supérieurs 8. Le bas des sections basses des jambes 5 est pourvu de moyens de fixation inférieurs 25, 26.

Les moyens de fixation supérieurs 8 comprennent chacun une paire de demi-coques 9, 10 associée à chaque jambe 5. La demi-coque inférieure 9 fait partie de la jambe 5, autrement dit, elle est réalisée d'une pièce avec le jambage 3. La demi-coque supérieure 10 est indépendante du jambage 3. Lorsque les deux demi-coques 9, 10 sont en matériau plastique, au moins en partie, elles peuvent néanmoins être reliées l'une à l'autre, par exemple par une bande de matière plastique formant un film charnière.

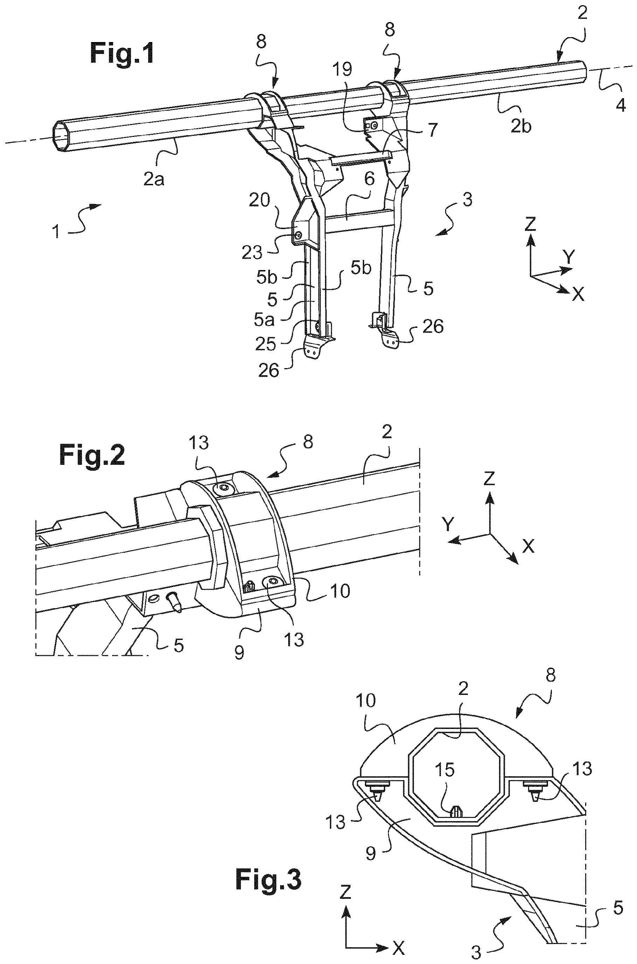

Les demi-coques 9, 10 de chaque paire sont en outre solidarisées l'une à l'autre en emprisonnant entièrement l'élément métallique principal transversal 2, dans un plan perpendiculaire à sa direction longitudinale 4, et en épousant le contour de l'élément métallique principal transversal 2, tel que visible plus particulièrement sur la figure 3.

Dans le présent exemple, l'élément métallique principal transversal 2 présente une section transversale octogonale, pour bloquer toute rotation des demi-coques et pour une réduction optimale des jeux d'assemblage. D'autres formes de section sont néanmoins envisageables pour éviter tout mouvement relatif de ces pièces.

On notera également que les demi-coques 9, 10 de chaque paire sont solidarisées suivant un plan sensiblement horizontal dans la position d'utilisation de la traverse 1, ce plan contenant ici l'axe de symétrie longitudinal de l'élément métallique principal transversal 2 (voir figure 3). Ceci peut favoriser le maintien de l'élément métallique principal transversal 2 lors de son montage sur le jambage 3 : il repose en effet sur, et est maintenu dans, chaque demi-coque inférieure 9.

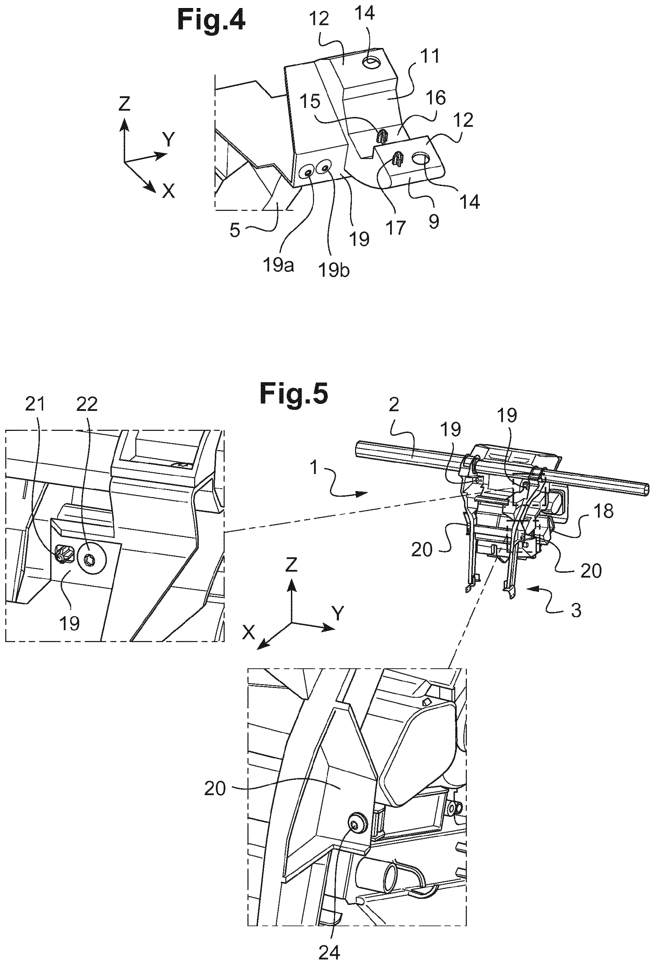

Tel que visible plus particulièrement sur la figure 4, la demi-coque inférieure 9 présente ainsi une gorge 11 recevant l'élément métallique principal transversal 2, et deux zones planes 12 de fixation. La structure de la demi-coque supérieure 10 est similaire, comme on peut le voir sur la figure 3.

Les demi-coques 9, 10 sont fixées l'une à l'autre par des moyens de fixation de type vis ou rivet 13. Afin de maintenir bien serré l'élément métallique principal transversal 2, ces moyens de fixation sont situés de préférence de part et d'autre de ce dernier et relient uniquement les demi-coques 9, 10 entre elles. Tel que visible sur les figures 2 et 3, une vis 13 est prévue de chaque côté d'un moyen de fixation supérieur 8, au niveau d'une zone plane de fixation 12, laquelle présente à cet effet un orifice traversant 14 (figure 4).

Les moyens de fixation supérieurs 8 sont en outre pourvus d'un élément d'indexation mâle/femelle 15 coopérant avec un élément d'indexation correspondant de l'élément métallique principal transversal 2. Cet élément d'indexation 15 est ici un doigt en saillie du fond 16 de la gorge 11, lequel coopère avec un orifice de l'élément métallique principal transversal 2 (figure 3). Cet élément d'indexation 15, ménagé ici sur la demi-coque inférieure 9, participe au prémaintien de l'élément métallique principal transversal 2 dans les demi-coques inférieures 9 avant sa fixation définitive. Il peut également participer au blocage du jambage par rapport à l'élément métallique principal transversal 2, par exemple lorsque la section de celui-ci est circulaire.

Enfin, pour faciliter leur positionnement, les demi-coques 9, 10 de chaque paire comprennent également des éléments d'indexation mâle/femelle complémentaires. Il s'agit ici d'un doigt 17, en saillie d'une zone plane de fixation 12 de la demi-coque inférieure 9, coopérant avec un orifice de la demi-coque supérieure 10. Bien entendu, le doigt 17 pourrait faire partie de la demi-coque supérieure 10. L'invention n'est pas limitée non plus par un nombre particulier de ces éléments d'indexation, ni par leur position.

Le jambage 3 comprend également des zones de fixation destinées à recevoir en fixation un élément fonctionnel 18, par exemple ici un groupe HVAC (acronyme de l'anglais « heating, ventilation and air-conditioning »), autrement dit un groupe de gestion du chauffage, de la ventilation et de la climatisation.

Dans l'exemple représenté, quatre zones de fixation 19, 20 sont prévues, deux zones de fixation haute 19 et deux zones de fixation basse 20. Ces zones de fixation 19, 20 sont agencées de manière à permettre une fixation de l'élément fonctionnel 18 suivant une unique direction de fixation, correspondant ici sensiblement à l'axe longitudinal X du véhicule.

Tel que visible sur la figure 4 et sur les détails de la figure 5, chaque zone de fixation haute 19 est formée d'une paroi plane percée deux orifices 19a, 19b recevant respectivement un pion de centrage 21 et une tige filetée 22 solidaires de l'élément fonctionnel 18.

Les zones de fixation basse 20 sont chacune formées d'une paroi plane percée d'un orifice 23 (fig.1) pour le passage d'une vis 24.

Bien entendu, l'invention n'est pas limitée par la forme, le nombre et la nature des zones de fixation, pourvu qu'elles permettent d'assurer une fixation de l'élément fonctionnel 18 au jambage 3. A noter que le jambage 3 pourrait présenter des zones de fixation pour la fixation de plusieurs éléments fonctionnels.

Les moyens de fixation inférieurs du jambage comprennent ici des trous 25 à l'extrémité inférieure de chaque jambe 5 pour le vissage sur des pièces de liaison 26 métalliques elles-mêmes fixées de part et d'autre du tunnel central du plancher du véhicule (non représenté). Ces trous 25 peuvent comprendre des écrous sertis pour faciliter la fixation des pattes. En variante, le bas des sections basses des jambes pourraient être directement fixées de part et d'autre du tunnel central.

L'invention permet de réaliser une interface jambage / élément métallique principal transversal offrant une bonne tenue mécanique. Le montage des différentes pièces est en outre simple et toutes les fixations sont accessibles pour l'opérateur en restant du même côté de la traverse poste de conduite.

## Revendications

1. Traverse (1) de poste de conduite d'un véhicule, comportant un élément métallique principal transversal (2) et un jambage central (3) destiné à être fixé au plancher du véhicule, le jambage (3) étant une pièce unitaire comprenant deux jambes (5) sensiblement perpendiculaires à une direction longitudinale de l'élément métallique principal transversal (2) et au moins une barre de liaison (6, 7) entre les deux jambes (5), des moyens de fixation supérieurs et inférieurs étant prévus en haut et en bas du jambage (3) pour le fixer respectivement à l'élément métallique principal (2) et au plancher, **caractérisée en ce que** :
- les moyens de fixation supérieurs (8) comprennent une paire de demi-coques (9, 10) associée à chaque jambe (5), au moins une demi-coque de chaque paire faisant partie de la jambe, les demi-coques de chaque paire étant solidarisées l'une à l'autre en emprisonnant entièrement l'élément métallique principal transversal (2), dans un plan perpendiculaire à sa direction longitudinale, et en épousant le contour de l'élément métallique principal transversal (2).

2. Traverse (1) selon la revendication 1, **caractérisée en ce que** les demi-coques (9, 10) et l'élément métallique principal transversal (2) sont conformés pour bloquer tout mouvement de l'un par rapport à l'autre.

3. Traverse (1) selon la revendication 1 ou 2, **caractérisée en ce que** l'élément métallique principal transversal (2) présente une section transversale non circulaire, par exemple ovale ou polygonale.

4. Traverse (1) selon l'une quelconque des revendications 1 à 3, **caractérisée en ce qu'**au moins une demi-coque (9) de chaque paire comprend au moins un élément d'indexation mâle/femelle (15) coopérant avec un élément d'indexation (16) correspondant de l'élément métallique principal transversal (2).

5. Traverse (1) selon la revendication 4, **caractérisée en ce que** ledit au moins un élément d'indexation (15) est ménagé sur la demi-coque (9) faisant partie de la jambe (5).

6. Traverse (1) selon l'une quelconque des revendications 1 à 5, **caractérisée en ce que** les demi-coques de chaque paire comprennent des éléments d'indexation (17) mâle/femelle complémentaires.

7. Traverse (1) selon l'une quelconque des revendications 1 à 6, **caractérisée en ce que** les demi-coques (9, 10) de chaque paire sont solidarisées suivant un unique plan, par exemple un plan sensiblement horizontal dans une position d'utilisation de la traverse dans laquelle l'élément métallique principal transversal s'étend sensiblement horizontalement et/ou un plan contenant un axe de symétrie longitudinal de l'élément métallique principal transversal.

8. Traverse (1) selon l'une quelconque des revendications 1 à 7, **caractérisée en ce que** le jambage (3) comprend des zones de fixation (19, 20) destinées à recevoir en fixation au moins un élément fonctionnel.

9. Traverse (1) selon l'une quelconque des revendications 1 à 8, **caractérisée en ce que** le jambage (3) est en un matériau moulé choisi parmi un polymère, du magnésium et leur association.

10. Traverse (1) selon l'une quelconque des revendications 1 à 9, **caractérisée en ce que** les demi-coques (9, 10) de chaque paire sont en matériau polymère et sont reliées par un film charnière en matériau polymère.

## Patentansprüche

1. Querträger (1) der Fahrerkabine eines Fahrzeugs, welcher ein quer verlaufendes metallisches Hauptelement (2) und einen zentralen Ständer (3), der dazu bestimmt ist, am Boden des Fahrzeugs befestigt zu werden, aufweist, wobei der Ständer (3) ein einstückiges Teil ist, das zwei Beine (5), die zu einer Längsrichtung des quer verlaufenden metallischen Hauptelements (2) im Wesentlichen senkrecht sind, und wenigstens eine Verbindungsstange (6, 7) zwischen den zwei Beinen (5) umfasst, wobei obere und untere Befestigungsmittel oben und unten an dem Ständer (3) vorgesehen sind, um ihn an dem metallischen Hauptelement (2) bzw. am Boden zu befestigen, **dadurch gekennzeichnet, dass**:
- die oberen Befestigungsmittel (8) ein Paar Halbschalen (9, 10) umfassen, das jedem Bein (5) zugeordnet ist, wobei wenigstens eine Halbschale jedes Paares ein Teil des Beins ist, wobei die Halbschalen jedes Paares fest miteinander verbunden sind, wobei sie das quer verlaufende metallische Hauptelement (2) in einer Ebene, die zu seiner Längsrichtung senkrecht ist, vollständig umschließen, und indem sie an der Kontur des quer verlaufenden metallischen Hauptelements (2) anliegen.

2. Querträger (1) nach Anspruch 1, **dadurch gekennzeichnet, dass** die Halbschalen (9, 10) und das quer verlaufende metallische Hauptelement (2) so gestaltet sind, dass sie jede Bewegung relativ zueinander blockieren.

3. Querträger (1) nach Anspruch 1 oder 2, **dadurch gekennzeichnet, dass** das quer verlaufende metallische Hauptelement (2) einen nicht kreisförmigen, zum Beispiel ovalen oder vieleckigen Querschnitt aufweist.

4. Querträger (1) nach einem der Ansprüche 1 bis 3, **dadurch gekennzeichnet, dass** wenigstens eine Halbschale (9) jedes Paares wenigstens ein Rastelement vom Typ eines Stiftes/einer Aufnahme (15) umfasst, das mit einem entsprechenden Rastelement (16) des quer verlaufenden metallischen Hauptelements (2) zusammenwirkt.

5. Querträger (1) nach Anspruch 4, **dadurch gekennzeichnet, dass** das wenigstens eine Rastelement (15) an der Halbschale (9) ausgebildet ist, die Teil des Beins (5) ist.

6. Querträger (1) nach einem der Ansprüche 1 bis 5, **dadurch gekennzeichnet, dass** die Halbschalen jedes Paares komplementäre Rastelemente (17) vom Typ eines Stiftes/einer Aufnahme umfassen.

7. Querträger (1) nach einem der Ansprüche 1 bis 6, **dadurch gekennzeichnet, dass** die Halbschalen (9, 10) jedes Paares entlang einer einzigen Ebene fest miteinander verbunden sind, zum Beispiel einer Ebene, die in einer Verwendungsposition des Querträgers, in welcher sich das quer verlaufende metallische Hauptelement im Wesentlichen horizontal erstreckt, im Wesentlichen horizontal ist, und/oder einer Ebene, die eine Längssymmetrieachse des quer verlaufenden metallischen Hauptelements enthält.

8. Querträger (1) nach einem der Ansprüche 1 bis 7, **dadurch gekennzeichnet, dass** der Ständer (3) Befestigungsbereiche (19, 20) umfasst, die dazu bestimmt sind, ein funktionales Element zur Befestigung aufzunehmen.

9. Querträger (1) nach einem der Ansprüche 1 bis 8, **dadurch gekennzeichnet, dass** der Ständer (3) aus einem geformten Material besteht, das aus einem Polymer, Magnesium und deren Kombination ausgewählt ist.

10. Querträger (1) nach einem der Ansprüche 1 bis 9, **dadurch gekennzeichnet, dass** die Halbschalen (9, 10) jedes Paares aus Polymermaterial bestehen und durch eine Scharnierfolie aus Polymermaterial verbunden sind.

## Claims

1. Crossmember (1) of a vehicle driving station, having a transverse main metal element (2) and a central strut (3) intended to be fastened to the floor of the vehicle, the strut (3) being a unitary component comprising two legs (5) substantially perpendicular to a longitudinal direction of the transverse main metal element (2) and at least one connecting bar (6, 7) between the two legs (5), upper and lower fastening means being provided at the top and bottom of the strut (3) for fastening it to the main metal element (2) and the floor, respectively, **characterized in that**:
- the upper fastening means (8) comprise a pair of half-shells (9, 10) joined to each leg (5), at least one half-shell of each pair being part of the leg, the half-shells of each pair being secured together, entirely enclosing the transverse main metal element (2), in a plane perpendicular to the longitudinal direction thereof, and following the contour of the transverse main metal element (2).

2. Crossmember (1) according to Claim 1, **characterized in that** the half-shells (9, 10) and the transverse main metal element (2) are designed to prevent any movement of one with respect to the other.

3. Crossmember (1) according to Claim 1 or 2, **characterized in that** the transverse main metal element (2) has a non-circular, for example oval or polygonal, cross section.

4. Crossmember (1) according to any one of Claims 1 to 3, **characterized in that** at least one half-shell (9) of each pair comprises at least one male/female indexing element (15) cooperating with a corresponding indexing element (16) of the transverse main metal element (2).

5. Crossmember (1) according to Claim 4, **characterized in that** said at least one indexing element (15) is formed on the half-shell (9) that is part of the leg (5).

6. Crossmember (1) according to any one of Claims 1 to 5, **characterized in that** the half-shells of each pair comprise complementary male/female indexing elements (17) .

7. Crossmember (1) according to any one of Claims 1 to 6, **characterized in that** the half-shells (9, 10) of each pair are secured in a single plane, for example a substantially horizontal plane in a use position of the crossmember in which the transverse main metal element extends substantially horizontally and/or a plane containing a longitudinal axis of symmetry of the transverse main metal element.

8. Crossmember (1) according to any one of Claims 1 to 7, **characterized in that** the strut (3) comprises fastening zones (19, 20) to which at least one functional element is intended to be fastened.

9. Crossmember (1) according to any one of Claims 1 to 8, **characterized in that** the strut (3) is made of a moulded material chosen from a polymer, magnesium and the combination thereof.

10. Crossmember (1) according to any one of Claims 1 to 9, **characterized in that** the half-shells (9, 10) of each pair are made of polymer material and are connected by a film hinge made of polymer material.
